# EUROPÄISCHE PATENTSCHRIFT

(11) **EP 1 061 712 B1**
(45) Veröffentlichungstag und Bekanntmachung des Hinweises auf die Patenterteilung: **21.11.2007**
(21) Anmeldenummer: 99810524.1
(22) Anmeldetag: 14.06.1999
(51) Int. Cl.: H04L 29/06, G06F 17/30, G01C 21/20

(54) **Einrichtung und Verfahren zur Selektion von Informationseinheiten für mobile Client-Rechner**
Device and method for selecting information for mobile clients
Dispositif et procédé pour sélectionner de l'information pour des clients mobiles

(43) Veröffentlichungstag der Anmeldung: 20.12.2000
(73) Patentinhaber: ABB RESEARCH LTD., 8050 Zürich (CH)
(72) Erfinder: Fabri, Andreas, 8002 Zürich (CH)
(74) Vertreter: Broydé, Marc

(56) Entgegenhaltungen:
- EP-A- 0 785 535
- WO-A-00/50844
- DE-U- 29 615 782
- US-A- 5 608 635
- US-A- 5 659 732
- DEOK-SOO K ET AL: "Representing the Voronoi diagram of a simple polygon using rational quadratic Bezier curves" COMPUTER AIDED DESIGN, Bd. 27, Nr. 8, 1. August 1995 (1995-08-01), Seite 605-614 XP004022770 ISSN: 0010-4485

## Beschreibung

### Technisches Gebiet

Die Erfindung bezieht sich auf das Gebiet der Kommunikationstechnik. Sie bezieht sich auf eine Einrichtung, ein computersystem und ein verfahren und zur selektion von Informationseinheiten für mobile client-Rechner gemäss dem Oberbegriff der Patentansprüche 1, 6 und 12.

### Stand der Technik

Eine derartiges verfahren ist beispielsweise aus US 5,659,732 bekannt. Dabei werden Informationseinheiten eines Kommunikationsnetzes, beispielsweise HTML-Dateien, die über das Internet gelesen werden können, durch eine sogenannte suchmaschine indexiert. Aufgrund eines suchauftrags eines Benutzers, der einen oder mehrere suchbegriffe enthält, werden mittels eines Index gefundene Dateien bestimmt. Dem Benutzer wird eine geeignet aufbereitete Liste der gefundenen Dateien und von Adressen der gefundenen Dateien präsentiert, beispielsweise in Form von URLS (uniform resource locators). Aufgrund der vielzahl der im Internet ansprechbaren Dateien ist die Anzahl der gefundenen Dateien oft sehr gross. Dadurch wird das Finden der für den Benutzer relevanten Dateien und Informationen erschwert.

Aus der Schrift EP 785 535 A ist eine Einrichtung zur selektion von Informationseinheiten für einen mobile Client-Rechner mit den Merkmalen des Oberbegriff des Patentanspruchs 1 bekannt.

In der Schrift WO 00/50844, welche im Stand der Technik nach Artikel 54(3) EPÜ einbegriffen ist, wird eine Einrichtung zur Selektion von Informationseinheiten für einen mobile Client-Rechner beschrieben, die aus einem Server-Rechner mit Mitteln zur Selektion von Informationseinheiten nach vorgegebenen Kriterien besteht, wobei die vorgegebenen Kriterien geographische Lageinformationen aufweisen, jeder Informationseinheit eine geographische Lageinformation zugeordnet ist, und diese Lageinformation sowie eine geographische Position des Client-Rechners Eingabegrößen der Mittel zur Selektion sind, wobei der Server-Rechner Datenstrukturen zur Unterstützung einer Auswahl unter vorgegebenen jeweils der Lageposition einer Informationseinheit entsprechenden Punkten einer Ebene, die einem weiteren vorgegebenen der geographischen Position des Client-Rechners entsprechenden Punkt am nächsten liegen, aufweist.

Weiter ist allgemein die Idee bekannt, Autos oder Flugzeugsitzplätze mit Client-Rechnern mit HTML-Browsern zur Anzeige von Informationen aus dem Internet auszurüsten. Auch bei diesen Anwendungen besteht das oben beschriebene Problem der Informationsüberflutung des Benutzers.

### Darstellung der Erfindung

Es ist deshalb Aufgabe der Erfindung, eine Einrichtung, ein Computersystem und ein Verfahren zur Selektion von Informationseinheiten für mobile Client-Rechner der eingangs genannten Art zu schaffen, welche die Menge der Informationen, die einem Benutzer präsentiert werden, reduziert, und die Relevanz der selektierten Informationseinheiten für den Benutzer erhöht.

Diese Aufgabe löst eine Einrichtung, ein Computersystem und ein verfahren zur Selektion von Informationseinheiten mit den Merkmalen der Patentansprüche 1, 6 und 12.

Im erfindungsgemässen verfahren geschieht also die Selektion von Informationseinheiten für mobile client-Rechner dadurch, dass einzelnen Informationseinheiten jeweils eine geographische Lageinformation zugeordnet ist, und diese Lageinformation sowie eine geographische Position eines client-Rechners für die Selektion berücksichtigt werden.

Dadurch wird es möglich, die Selektion von Informationseinheiten auf diejenigen Informationseinheiten einzuschränken, welche einen bestimmten geographischen Bereich betreffen. Insbesondere können Informationseinheiten ausgewählt werden, die sich in der Nähe der Position des Client-Rechners befinden.

Ein wesentlicher Vorteil des erfindungsgemässen Verfahrens ist, dass sich die Selektion von Informationseinheiten auf einen vorgegebenen geographischen Bereich beschränkt und dadurch eine Vielzahl von irrelevanten Informationen eliminiert. Dadurch wird auch der rechnerische Aufwand zur Aufarbeitung, Übertragung und Präsentation der Informationen vermindert.

In einer Variante der Erfindung befindet sich der Client-Rechner in einem Transportmittel, beispielsweise einem Zug, Flugzeug oder Auto.

In einer weiteren Variante der Erfindung ist die berücksichtigte Position des Client-Rechners nicht zwingend die aktuelle, sondern kann eine vergangene oder eine erwartete zukünftige Position des Client-Rechners oder des Transportmittels sein.

In einer weiteren Variante der Erfindung handelt es sich bei den Informationseinheiten um Bilddateien, die von sogenannten Web-Kameras oder "WebCams" erzeugt und laufend aktualisiert werden.

Weitere bevorzugte Ausführungsformen gehen aus den abhängigen Patentansprüchen hervor.

### Kurze Beschreibung der zeichnungen

Im folgenden wird die Erfindung anhand eines bevorzugten Ausführungsbeispiels, welches in den beiliegenden Zeichnungen dargestellt ist, näher erläutert. Es zeigen:
- Figur 1: eine schematische Darstellung von Kommunikationsverbindungen und Elementen, die das erfindungsgemässe Verfahren verwendet;
- Figur 2: eine Darstellung von selektierten Informationseinheiten gemäss einer Variante der Erfindung; und
- Figur 3: einen Ausschnitt aus einem Voronoi-Diagramm.

Die in den Zeichnungen verwendeten Bezugszeichen und deren Bedeutung sind in der Bezugszeichenliste zusammengefasst aufgelistet. Grundsätzlich sind in den Figuren gleiche Elemente mit gleichen Bezugszeichen versehen. ,

### Wege zur Ausführung der Erfindung

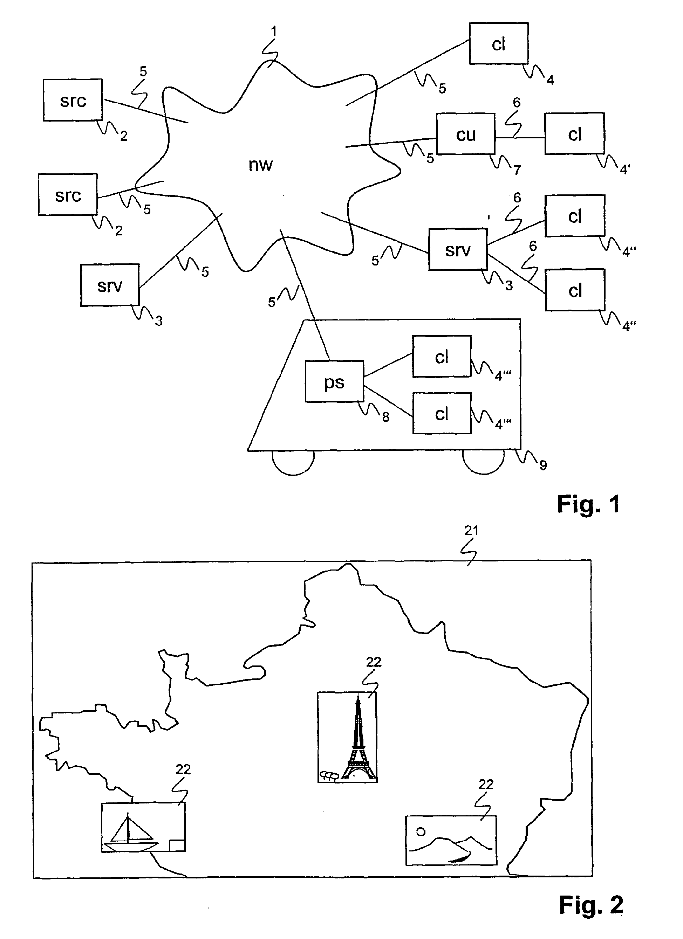

Die Figur 1 zeigt eine schematische Darstellung von Elementen und Verbindungen, die das erfindungsgemässe Verfahren bevorzugt verwendet. Die Verbindungen sind als bidirektionale Kommunikationsverbindungen zu verstehen. In Figur 1 sind über ein Kommunikationsnetz 1 mehrere Informationsquellen, das heisst Quellen 2 von Informationseinheiten, ein oder mehrere server-Rechner, kurz Server 3 genannt und ein oder mehrere Client-Rechner, kurz Clients 4 genannt, miteinander verbunden. Ein Client 4 weist eine Recheneinheit, eine Anzeigeeinheit sowie eine Kommunikationseinheit zur Kommunikation mit dem Kommunikationsnetz 1 auf. Vorzugsweise weist ein Client 4 auch Mittel zur Bestimmung seiner geographischen Position sowie Mittel zur Eingabe von Information durch einen Benutzer auf. Ein oder mehrere erste Clients 4 sind über eine Standardschnittstelle 5 des Kommunikationsnetzes 1 mit dem Kommunikationsnetz 1 verbunden. Ein oder mehrere zweite Clients 4' sind über eine spezialschnittstelle 6 mit einer Ankopplungseinheit 7 verbunden, die wiederum mit dem Kommunikationsnetzes 1 verbunden ist. Ein oder mehrere dritte Clients 4" kommunizieren nicht über das Kommunikationsnetz 1, sondern über Spezialschnittstellen 6 mit dem Server 3. weitere, vierte Clients 4"' sind mit einem gemeinsamen Proxy-Server 8 eines Transportmittels 9 verbunden, der wiederum mit dem Kommunikationsnetzes 1 verbunden ist Für die Realisierung der oben erwähnten Elemente der Erfindung bestehen verschiedene technologische Varianten. Beim Kommunikationsnetz 1 handelt es sich beispielsweise um das Internet, basierend auf dem TCP/IP-Protokoll, oder um das auf dem Internet aufbauende world wide web. Quellen 2 sind beispielsweise Dateien im HTML-Format oder einem davon abgeleiteten Format, oder Bilddateien, auf die durch das Kommunikationsnetz 1 zugegriffen werden kann. Clients 4 sind tragbar, beispielsweise ein PDA (personal digital assistant) oder ein Mobiltelefon mit eingebautem Web-Browser, oder sie sind in einem Transportmittel, beispielsweise einem Auto, Zug, Fahrrad, Flugzeug, Zeppelin, Boot oder Unterseeboot eingebaut. Eine Browser-Software des Clients 4 ist vollständig HTML-fähig, oder aber auf eine effiziente Darstellung von Bild- oder Textinformation zugeschnitten. Bei der Standardschnittstelle 5 handelt es sich vorzugsweise um eine TCP/IP( Transmission Control Protocol/Internet Protocol)-Verbindung. Diese kann beispielsweise transparent über ein Telefonnetz oder eine drahtlose übertragungseinrichtung realisiert werden. Bei der Spezialschnittstelle 6 handelt es sich beispielsweise um ein privates Kommunikationsnetzwerk oder um ein nichtstandardisiertes Kommunikationsprotokoll oder um eine proprietäre Schnittstelle.

Es werden im folgenden zwei vorteilhafte Varianten der Realisierung der Erfindung beschrieben. Beiden Varianten gemeinsam ist, dass der Server 3 Informationen von mehreren Quellen 2 sammelt und jeder Quelle 2 eine geographische Lageinformation zuordnet. Diese zuordnung geschieht beispielsweise durch Extraktion von geographischer Lageinformation, die bereits explizite in einer Quelle vorhanden ist oder implizite in einem Text der Quelle vorhanden ist, durch Analyse einer mit der Quelle assoziierten IP-Adresse oder durch manuelle Eingabe durch einen Bediener.

Ein Vorschlag, wie Informationseinheiten, die über das Internet verfügbar gemacht werden, mit expliziten Informationen über eine geographische Lage versehen werden können, wird in der "W3C Proposed Recommendation 03 March 1999" mit dem Titel "Resource Description Framework (RDF) Schema Specification" von Dan Brickley und R.V. Guha, zu finden unter http://www.w3.org/TR/PR-rdf-schema, gemacht.

In einer ersten vorteilhaften Variante der Erfindung dient die Erfindung zur Information und Unterhaltung von Passagieren in einem öffentlichen Transportmittel wie der Bahn, einem Bus oder einem Flugzeug. Dabei werden den Passagieren mittels der Anzeigeeinheit des Clients 4 Bilder präsentiert, wobei die Bilder einen Bezug zur Route des Transportmittels haben. Beispielsweise werden diese Bilder von sogenannten web-Kameras oder "WebCams" als Quellen 2 erzeugt und laufend aktualisiert. Dazu nimmt der Client 4 periodisch Kontakt mit dem Server 3 auf und übermittelt dem Server 3 eine Anfrage sowie eine vergangene, aktuelle oder zukünftige Position des Transportmittels. Die Position, das heisst die geographische Lage des Transportmittels wird beispielsweise mittels eines GPS(Global Positioning System)-Empfängers ermittelt. Im Falle eines Bahnfahrzeuges können auch Signalisierungs- und Streckendaten, im Falle eines Flugzeugs auch entsprechende Navigationsdaten zur Bestimmung der Position verwendet werden.

Eine erste Form der Anfrage verlangt nach einer der Position des Transportmittels nächstgelegenen Web-Kamera. Der Server 3 übermittelt dem Client 4 darauf entweder eine Referenz respektive eine Adresse, beispielsweise eine URL(Uniform Resource Locator)-Adresse, einer Web-Kamera, worauf der Client 4 die Bilddaten von der Web-Kamera lädt, oder der Server lädt selber die Bilddaten von der webkamera und übermittelt die Bilddaten dem Client 4. In beiden Fällen ist es vorteilhaft, wenn der Server überprüft, ob sich die Bilddaten seit der letzten Anfrage geändert haben, so dass auf die Datenübertragung zum Client 4 verzichtet werden kann. Periodische Anfragen zeigen somit entweder neue Bilder der gleichen Web-Kamera, oder Bilder einer anderen web-Kamera, falls sich das Transportmittel dieser nähert. Diese erste Form der Anfrage ist vorteilhaft, wenn mehrere oder alle Passagiere die angezeigten Bilder eines Clients 4 sehen. Bilddaten enthalten dabei neben der eigentlichen Bildinformation auch Daten wie beispielsweise Parameter des Bildes, Aufnahmezeit oder Kommentartexte.

Eine zweite Form der Anfrage verlangt nach allen Web-Kameras, die sich in einem vorzugsweise rechteckigen Ausschnitt der Umgebung der Position des Transportmittels befinden. Beispielsweise wird dieser Ausschnitt durch die geographische Breite und Länge seines Mittelpunktes sowie durch die Breite und Höhe des Ausschnittes, beispielsweise in Kilometern, beschrieben. Der Server 3 übermittelt dem Client 4 darauf als Referenzen zu Quellen 2 alle Adressen von Web-Kameras, die sich in diesem Ausschnitt befinden, sowie die geographische Lage, das heisst beispielsweise die geographische Breite und Länge, sowie verkleinerte oder Thumbnail-Bilder 22 von den entsprechenden Web-Kameras. Der Client 4 überlagert diese verkleinerten Bilder einer Karte 21 der Umgebung und stellt das resultierende Bild auf der Anzeigeeinheit des Clients 4 dar. Ein Beispiel für eine solche Darstellung ist in Figur 2 gezeigt. Die verkleinerten Bilder 22 sind vorteilhafterweise Hyperlinks, das heisst, dass ihnen eine Referenz zugeordet ist. Die Referenz ist beispielsweise eine Adresse einer Web-Kamera. Der Benutzer wählt anhand dieser Darstellung, welches Bild er vergrössert sehen möchte. Diese Wahl geschieht beispielsweise durch Anklicken eines verkleinerten Bildes 22 mit einem graphischen Eingabegerät oder durch Berühren einer berührungsempfindlichen Oberfläche der Anzeigeeinheit. Das gewählte Bild wird durch den Client 4 von der Web-Kamera geladen, oder der Server 3 lädt die Bilddaten von der Web-Kamera und übermittelt die Bilddaten dem Client 4. Diese zweite Form der Anfrage ist vorteilhaft, wenn beispielsweise jeder Client 4 einem einzelnen Passagier zugeordnet ist. Vorteilhafterweise ist das Transportmittel mit einem Proxy-Server 8 ausgerüstet. Dieser speichert die Antworten auf alle Anfragen aller Clients 4 in einem zyklischen Speicher, so dass Bilder und Adressen, die von mehreren Passagieren verlangt werden, nur einmal dem Transportmittel übermittelt werden.

Durch Kompression von Bilddaten und bei ausreichender Bandbreite der übertragungsschnittstellen 5 respektive 6 ist es auch möglich, Videobilder anstelle von Standbildern darzustellen.

Der Server 3 unterhält Datenstrukturen, die Beantwortung der Anfragen der clients 4 auf effiziente weise ermöglichen:

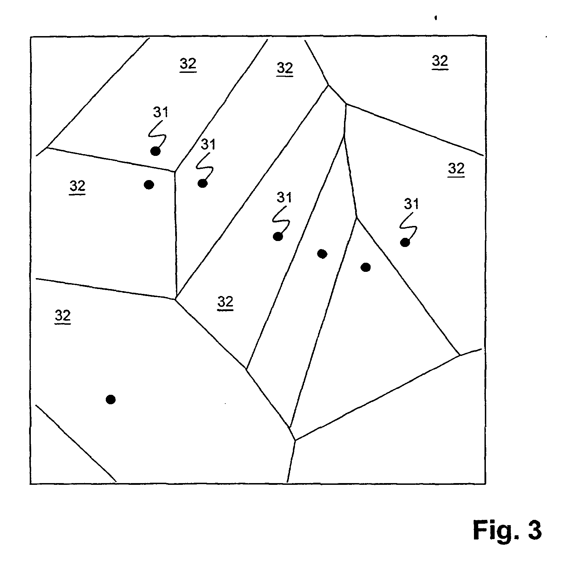

Zur Bestimmung einer der Position des Transportmittels nächstgelegenen Web-Kamera gemäss der ersten Form der Anfrage werden beispielsweise voronoi-Diagramme verwendet. Figur 3 zeigt einen Ausschnitt aus einem zweidimensionalen Voronoi-Diagramm. In einem zweidimensionalen Voronoi-Diagramm ist eine Ebene, die eine Menge von gegebenen Punkten 31 aufweist, derart in eine Menge von Regionen 32 aufgeteilt, dass die Distanz zwischen jedem Punkt einer Region zu einem der gegebenen Punkte 31 kleiner ist als die Distanz zu jedem der anderen gegebenen Punkte 31. In der vorliegenden Erfindung entsprechen die Positionen von Web-Kameras den gegebenen Punkten 31. Aus der Position eines Clients 4 wird ermittelt, in welcher Region sich der Client 4 befindet, und welches somit die nächstgelegene Web-Kamera ist.

Mit der Verwendung eines Voronoi-Diagramms ist typischerweise eine entsprechende Suchdatenstruktur verbunden. Diese ist in der Regel ein gerichteter azyklischer Graph mit einer Höhe der Ordnung O(log n), wobei n die Grösse, das heisst die Anzahl gegebener Punkte des Voronoi-Diagramms ist, und die maximale Anzahl abgehender Äste eines jeden Knotens im Graph konstant ist. Damit kann man in logarithmischer Zeit für einen Punkt (x,y) die zugehörige Zelle im Voronoi-Diagramm und dadurch den nächstgelegenen der gegebenen Punkte finden. Die Suchstruktur wird typischerweise auch verwendet um neue Punkte hinzuzufügen oder zu entfernen. Beides führt zu Veränderungen des voronoi-Diagramms und der Suchstruktur, jedoch mit geringerem Aufwand als eine vollständige Neubestimmung derselben.

Zur Bestimmung aller Punkte, die sich in einem gegebenen rechteckigen Ausschnitt einer Ebene befinden, gemäss der zweiten Form der Anfrage, werden beispielsweise zweidimensionale Bereichsbäume (range trees, im folgenden RT genannt) verwendet. Ein RT für zweidimensionale Ortskoordinaten (x,y) weist einen RT für eine erste (x) Koordinate auf, wobei jeder Knoten des RT, der kein Blatt ist, einen RT mit zweiten (y) Koordinaten aller Punkte im Unterbaum des Knotens aufweist. Ein zweidimensionaler RT fuer eine Punktmenge in der euklidischen Ebene ist eine Datenstruktur, die auf effiziente Weise Fenster-Anfragen unterstuetzt. Eine Fenster-Anfrage bedeutet das Auflisten der Punkte, die sich in einem gegebenen rechteckigen achsenparallelen Ausschnitt der Ebene befinden. Effizient bedeutet einen polylogarithmischen Aufwand, das heisst, einen Aufwand der Ordnung O((log n)^{c}), wobei n die Anzahl der Punkte und c eine Konstante ist. RT's werden als statische, semidynamische oder dynamische Strukturen implementiert. Bei statischen Strukturen sind vor der Berechnung der Struktur alle Punkte bekannt. Bei semi-dynamischen Strukturen können Punkte effizient hinzugefügt werden. Bei dynamischen Strukturen können Punkte effizient hinzugefügt und entfernt werden

Die Datenstrukturen, also voronoi-Diagramm oder zweidimensionaler RT, werden laufend aufdatiert, indem neu verfügbar werdende Web-Kameras aufgenommen und nicht verfügbare ausgeschieden werden, so dass eine optimale Verfügbarkeit der angebotenen Daten gewährleistet ist. Da die Anzahl n von Web-Kameras beträchtlich sein kann, müssen diese Operationen effizient realisiert werden, beispielsweise mit polylogarithmischem Aufwand.

Eine automatisierte Ermittlung von Web-Kameras aus der ständig wechselnden Vielzahl von URL's geschieht beispielsweise, indem die Umgebung von Bildern, die in Webseiten enthalten sind, auf Stichwörter wie "WebCam" oder "Kamera" untersucht werden, und indem Bilder auf periodische Veränderungen untersucht werden. Diese Ermittlung ergibt eine Menge von potentiell interessanten web-Kameras. Bei der Aufnahme von web-Kameras in die Datenstrukturen des Servers 3 wird die geographische Lageinformation entweder aus Daten, welche die Web-Kamera respektive der die Kamera verwaltende Rechner selber explizite liefert, bestimmt, oder sie werden durch eine Bedienperson hinzugefügt. Durch eine solche Bedienperson wird auch die inhaltliche Qualität der Bilder einer gegebenen Web-Kamera geprüft.

Diese erste Variante der Erfindung bietet gegenüber herkömmlichen Anzeigen in Flugzeugen oder Bahnfahrzeugen einen wesentlich höheren Informations- und Unterhaltungswert. Im Vergleich mit völlig freien Internetabfragen durch die Passagiere wird die Kommunikationsschnittstelle zwischen dem Transportmittel 9 und dem Kommunikationsnetz 1 weit weniger belastet.

In einer zweiten vorteilhaften Variante der Erfindung dient die Erfindung zur Information von Insassen eines Autos oder von Benutzern eines tragbaren Clients 4. Dabei werden dem Benutzer oder den Benutzern mittels einer Anzeigeeinheit des Clients 4 Informationen präsentiert, welche einen Bezug zur Position des Transportmittels und zu einer benutzergegebenen Kategorie haben. Beispielsweise ermittelt der Benutzer mit Hilfe der erfindungsgemässen Einrichtung, welches die nächstgelegene Pizzeria ist.

Dazu läuft das erfindungsgemässe Verfahren wie folgt ab: Der Server 3 übermittelt dem Client 4 eine Menge von Kategorien, an denen ein mobiler Benutzer interessiert sein könnte. Beispielsweise bezeichnen diese Kategorien Einrichtungen wie Restaurants, Parkhäuser, Bushaltestellen, Kinos, Veranstaltungen, Polizeiwachen oder öffentliche Bedürfniseinrichtungen. Der Client 4 stellt diese Kategorien auf seiner Anzeigeeinheit dar, worauf der Benutzer eine interessierende Kategorie mittels eines Eingabegerätes auswählt. Die Übermittlung, Darstellung und Auswahl von Kategorien geschieht vorzugsweise dadurch, dass ein Benutzer sein Interesse durch Auswahl in einem Fragebaum mit sukzessive spezifisch werdenden Fragen bestimmt. Der Server bestimmt dabei entsprechend einer vom Client 4 übermittelten Antwort des Benutzers die jeweils nächste Auswahl. Der Client 4 übermittelt dem Server 3 auch Information über die geographische Lage oder Position des Clients 4. Die Position wird beispielsweise mittels eines im Client 4 eingebauten GPS(Global Positioning System)-Empfängers bestimmt.

Nach der oben beschriebenen Wahl einer interessierenden Kategorie sucht der Server nach entsprechenden Einrichtungen, die sich in räumlicher Nähe des Clients 4 befinden. Dazu bestimmt der Server 3 beispielsweise die nächstgelegene Einrichtung, eine vorgegebene Anzahl nächstgelegener Einrichtungen oder die Menge von Einrichtungen, die sich innert einer vorgegebenen Distanz zum Client 4 befinden. Dazu unterhält der Server 3 eine Datenbank über Einrichtungen, die auch geographische Lageinformationen dieser Einrichtungen enthält. Beispielsweise weist ein Datensatz dieser Datenbank für jede Einrichtung eine geographische Lageinformation, eine kurze Beschreibung oder Stichworte zur Einrichtung, sowie eine Referenz zu weiteren Informationen über die Einrichtung auf. Die Referenz ist vorteilhafterweise eine Netzwerkadresse, insbesondere ein URL. Die Datenbank wird automatisch, teilweise manuell oder nur manuell anhand von Webseiten und anderen Information über die Einrichtungen erzeugt. Solange Webseiten nicht standardmässig geographische Lageinformationen aufweisen, ist ein manueller Arbeitsanteil erforderlich. Er wird beispielsweise durch einen spezialisierten Informationsdienst erbracht und finanziert durch die betroffenen Einrichtungen und/oder durch Belastung von Benutzeranfragen.

Der Server 3 übermittelt dem Client 4 kurze Beschreibungen der einen oder mehreren gefundenen Einrichtungen sowie vorteilhafterweise Hyperlinks, anhand deren der Client 4 direkt Informationen über gefundene Einrichtungen abrufen kann. Solche Informationen betreffen beispielsweise Preise, Fahrpläne, Programme, Menüs, Weinkarten, Belegung oder Qualität der Einrichtung. In einer anderen Variante der Erfindung werden Kriterien betreffend dieser Informationen durch den Benutzer vorgegeben und bereits bei der Suche nach Einrichtungen berücksichtigt. Beispielsweise gibt ein Benutzer einer Suche nach Restaurants vor, dass ein Tisch für zehn Personen frei sein muss. Bei geeigneter Ausrüstung eines gefundenen Restaurants wird der Tisch über eine Webseite des Restaurants reserviert und beispielsweise der Wein chambriert. Auf Wunsch des Benutzers übermittelt der Server 3 dem Client 4 einen Plan der Umgebung des Clients 4, auf dem das Restaurant eingezeichnet ist.

### Bezugszeichenliste

- 1: Kommunikationsnetz, nw
- 2: Quelle von Informationseinheiten, src
- 3: Server, srv
- 4, 4', 4",4"': Client-Rechner, cl
- 5: Standardschnittstelle zum Kommunikationsnetz
- 6: Spezialschnittstelle
- 7: Ankopplungseinheit, cu
- 8: Proxy-Server, ps
- 9: Transportmittel
- 21: Karte
- 22: verkleinertes Bild
- 31: gegebener Punkt
- 32: Region

## Patentansprüche

1. Einrichtung zur Selektion von Informationseinheiten für einen mobilen Client-Rechner (4), bestehend aus einem Server-Rechner (3) mit Mitteln zur Selektion von informationseinheiten nach vorgegebenen Kriterien, wobei die vorgegebenen Kriterien geographische Lageinformationen aufweisen, jeder Informationseinheit eine geographische Lageinformation zugeordnet ist, und diese Lageinformation sowie eine geographische Position des Client-Rechners (4) Eingabegrößen der Mittel zur Selektion sind, **dadurch gekennzeichnet, dass** der Server-Rechner (3) Datenstrukturen zur Unterstützung einer Auswahl unter vorgegebenen jeweils der Lageposition einer Informationseinheit entsprechenden Punkten einer Ebene, die einem weiteren vorgegebenen der geographischen Position des Client-Rechners (4) entsprechenden Punkt am nächsten liegen, aufweist, wobei die Datenstrukturen ein Voronoi-Diagramm oder einen zweidimensionalen Bereichsbaum abbilden.

2. Einrichtung gemäß Anspruch 1, **dadurch gekennzeichnet, dass** die Informationseinheiten Bilder von web-Kameras enthalten.

3. Einrichtung gemäß Anspruch 1, **dadurch gekennzeichnet, dass** die Informationseinheiten an einen Client-Rechner (4) übermittelbar sind und Anweisungen zur Darstellung der Informationseinheiten auf einer Anzeigeeinheit des Client Rechners (4) enthalten.

4. Einrichtung gemäß einem der vorhergehenden Ansprüche, **dadurch gekennzeichnet, dass** die verwendete Position des Client-Rechners (4) eine aktuelle, eine vergangene oder eine erwartete zukünftige Position des Client-Rechners (4) ist.

5. Einrichtung gemäß einem der vorhergehenden Ansprüche, **dadurch gekennzeichnet, dass** die Informationseinheiten Referenzen zu Informationsquellen (2) aufweisen.

6. Computersystem zur Selektion von Informationseinheiten für mobile Client-Rechner (4), bestehend aus einem Server-Rechner (3) mit Mitteln zur Selektion von Informationseinheiten nach vorgegebenen Kriterien sowie einem Client-Rechner (4), wobei die vorgegebenen Kriterien geographische Lageinformationen aufweisen, jeder Informationseinheit eine geographische Lageinformation zugeordnet ist, und diese Lageinformation sowie eine Position des Client-Rechners (4) für die Selektion verwendbar sind, **dadurch gekennzeichnet, dass** der Server-Rechner (3) Datenstrukturen, zur Unterstützung einer Auswahl unter vorgegebenen jeweils der Lageposition einer Informationseinheit entsprechenden Punkten einer Ebene, die einem weiteren vorgegebenen der geographischen Position des Client-Rechners (4) entsprechenden Punkt am nächsten liegen, aufweist, wobei die Datenstrukturen ein Voronoi-Diagramm oder einen zweidimensionalen Bereichsbaum abbilden.

7. Computersystem gemäß Anspruch 6, **dadurch gekennzeichnet, dass** der Client-Rechner (4) Mittel zur Bestimmung seiner geographischen Lage aufweist.

8. Computersystem gemäß Anspruch 6 oder 7, **dadurch gekennzeichnet, dass** der Client-Rechner (4) in ein Transportmittel (9) eingebaut ist.

9. Computersystem gemäß Anspruch 8, **dadurch gekennzeichnet, dass** das Transportmittel (9) ein Zug, Flugzeug, Auto, Boot, Fahrrad, Zeppelin, Unterseeboot oder Raumschiff ist.

10. Computersystem gemäß Anspruch 9, **dadurch gekennzeichnet, dass** das Transportmittel (9) einen Proxy-Rechner (8) aufweist.

11. Computersystem gemäß Anspruch 9, **dadurch gekennzeichnet, dass** der Server-Rechner (3) und der Client-Rechner (4) über ein Kommunikationsnetz (1) miteinander verbunden sind, wobei vorzugsweise der Client-Rechner (4) eine drahtlose Kommunikationsverbindung zum Kommunikationsnetz (1) aufweist.

12. Verfahren zur Selektion von Informationseinheiten für mobile Client-Rechner (4), wobei jeder Informationseinheit eine geographische Lageinformation zugeordnet ist und diese Lageinformation sowie eine Position des Client-Rechners (4) für die Selektion verwendet werden, **dadurch gekennzeichnet, dass** die geographische Lageinformation jeder Informationseinheit dieser Informationseinheit eine räumliche Position zuordnet, und die Selektion eine vorgegebene Anzahl von Informationseinheiten bestimmt, deren zugeordnete Position am nächsten zur Position des Client-Rechners (4) liegt, wobei zur Unterstützung dieser Bestimmung ein Voronoi-Diagramm oder ein zweidimentionaler Bereichsbaum benutzt wird.

13. Verfahren gemäß Anspruch 12, **dadurch gekennzeichnet, dass** als Position des Client-Rechners (4) eine aktuelle, eine vergangene oder eine erwartete zukünftige Position des Client-Rechners (4) verwendet wird.

14. Verfahren gemäß Anspruch 12 oder Anspruch 13, **dadurch gekennzeichnet, dass** die geographische Lageinformation jeder Informationseinheit dieser Informationseinheit eine räumliche Position zuordnet, und die Selektion diejenigen Informationseinheiten bestimmt, deren zugeordnete Position in einer Umgebung der Position des Client-Rechners (4) liegt.

15. Verfahren gemäß Anspruche 12, **dadurch gekennzeichnet, dass** der Server-Rechner (3) durch Interaktion mit einem Benutzer interessierende Kategorien bestimmt, und die Selektion auf Informationseinheiten beschränkt, die diesen interessierenden Kategorien angehören.

16. Verfahren gemäß Anspruch 12, **dadurch gekennzeichnet, dass** der Server-Rechner (3) Resultate der Selektion dem Client-Rechner (4) übermittelt und der Client-Rechner (4) die Resultate auf einer Anzeigeeinheit des Client-Rechners (4) darstellt.

17. Verfahren gemäß Anspruch 12, **dadurch gekennzeichnet, dass** die Informationseinheiten Bilddaten enthalten, die von sogenannten Web-Kameras oder "webcams" erzeugt werden.

## Claims

1. Device for selection of data units for a mobile client computer (4), consisting of a server computer (3) with means of selection of data units according to predetermined criteria, with the predetermined criteria having geographical location data, geographical location data being allocated to each information unit and this location data in addition to a geographical position of the client computer (4) being input parameters of the selection medium, **characterised in that** the server computer (3) has data structures to support a selection from among predetermined points of a plane corresponding respectively to the location position of a data unit, which are located closest to a further predetermined point corresponding to the geographical point of the client computer (4), with the data structures forming a Voronoi diagram or a two-dimensional area tree.

2. Device according to claim 1, **characterised in that** the data units contain images from web cameras.

3. Device according to claim 1, **characterised in that** the data units can be transmitted to a client computer (4) and contain instructions for presentation of the data units on a display unit of the client computer (4).

4. Device according to any of the previous claims, **characterised in that** the position used of the client computer (4) is a current, a past or an anticipated future position of the client computer (4).

5. Device according to any of the previous claims, **characterised in that** the data units have references to data sources (2).

6. Computer system for selection of data units for mobile client computers (4), consisting of a server computer (3) with means for selection of data units according to predetermined criteria, in addition to a client computer (4) with the predetermined criteria having geographical location data, geographical location data being allocated to each information unit and these location data in addition to a position of the client computer (4) being usable for the selection, **characterised in that** the server computer (3) has data structures to support a selection from among predetermined points of a plane corresponding respectively to the location position of a data unit, which are located most closely to a further predetermined point corresponding to the geographical point of the client computer (4), with the data structures forming a Voronoi diagram or a two-dimensional area tree.

7. Computer system according to claim 6 **characterised in that** the client computer (4) has means for determination of a geographical position.

8. Computer system according to claim 6 or 7, **characterised in that** the client computer (4) is installed in a means of transport (9).

9. Computer system according to claim 8, **characterised in that** the means of transport (9) is a train, aeroplane, car, boat, bicycle, airship, submarine or a spaceship.

10. Computer system according to claim 9, **characterised in that** the means of transport (9) has a proxy computer (8).

11. Computer system according to claim 9, **characterised in that** the server computer (3) and the client computer (4) are connected to each other via a communications network (1), with the client computer (4) being preferably having a wireless connection to the communications network (1).

12. Method for selecting data units for mobile client computers (4), with geographical location data being allocated to each data unit and this location data in addition to a position of the client computer (4) being used for the selection, **characterised in that** the geographical location data of each data unit allocates a spatial position to this data unit and determines selection of a predetermined number of data units, the allocated position of which is closest to the position of the client computer (4), with a Voronoi diagram or a two-dimensional area tree being used to support this determination.

13. Method according to claim 12, **characterised in that** a current, a past or an anticipated future position is used as the position of the client computer (4).

14. Method according to claim 12 or claim 13, **characterised in that** the geographical location data of each data unit allocates a spatial position to this data unit and determines selection of the data units, the allocated position of which lies within a vicinity of the position of the client computer (4).

15. Method according to claim 12, **characterised in that** the server computer (3) determines interesting categories by interaction with a user and limits selection to data units that belong to these interesting categories.

16. Method according to claim 12, **characterised in that** the server computer (3) transmits results of the selection to the client computer (4) and the client computer (4) shows the results on a display unit of the client computer (4).

17. Method according to claim 12, **characterised in that** the data units contain image data generated by so-called web cameras or "webcams".

## Revendications

1. Dispositif pour la sélection d'unités d'information pour un calculateur client mobile (4) constitué d'un calculateur serveur (3) comportant des moyens pour la sélection d'unités d'information selon des critères prédéfinis, les critères prédéfinis présentant des informations de situation géographique, une information de situation géographique étant associée à chaque unité d'information et cette information de situation ainsi qu'une position géographique du calculateur client (4) étant des grandeurs d'entrée des moyens de sélection, **caractérisé en ce que** le calculateur serveur (3) présente des structures de données aidant à sélectionner parmi des points d'un plan prédéfinis, correspondant respectivement à la position de situation d'une unité d'information, les plus proches d'un autre point prédéfini correspondant à la position géographique du calculateur client (4), les structures de données reproduisant un diagramme de Voronoï ou une arborescence en deux dimensions.

2. Dispositif selon la revendication 1, **caractérisé en ce que** les unités d'information contiennent des images de caméras Web.

3. Dispositif selon la revendication 1, **caractérisé en ce que** les unités d'information peuvent être transférées sur un calculateur client (4) et contiennent des instructions pour reproduire des unités d'information sur une unité d'affichage du calculateur client (4).

4. Dispositif selon l'une quelconque des revendications précédentes, **caractérisé en ce que** la position utilisée du calculateur client (4) est une position actuelle, passée ou future attendue du calculateur client (4).

5. Dispositif selon l'une quelconque des revendications précédentes, **caractérisé en ce que** les unités d'information présentent des références à des sources d'information (2).

6. Système informatique pour sélectionner des unités d'information pour des calculateurs clients mobiles (4) constitué d'un calculateur serveur (3) comportant des moyens pour la sélection d'unités d'information selon des critères prédéfinis ainsi que d'un calculateur client (4), les critères prédéfinis présentant des informations de situation géographique, une information de situation géographique étant associée à chaque unité d'information et cette information de situation ainsi qu'une position du calculateur client (4) pouvant être utilisées pour la sélection, **caractérisé en ce que** le calculateur serveur (3) présente des structures de données aidant à sélectionner parmi des points d'un plan prédéfinis, correspondant respectivement à la position de situation d'une unité d'information, les plus proches d'un autre point prédéfini correspondant à la position géographique du calculateur client (4), les structures de données reproduisant un diagramme de Voronoï ou une arborescence en deux dimensions.

7. Système informatique selon la revendication 6, **caractérisé en ce que** le calculateur client (4) présente des moyens pour déterminer sa situation géographique.

8. Système informatique selon la revendication 6 ou la revendication 7, **caractérisé en ce que** le serveur client (4) est intégré dans un moyen de transport (9).

9. Système informatique selon la revendication 8, **caractérisé en ce que** le moyen de transport (9) est un train, un avion, une voiture, un bateau, une bicyclette, un ballon dirigeable, un sous-marin ou un engin spatial.

10. Système informatique selon la revendication 9, **caractérisé en ce que** le moyen de transport (9) est un calculateur Proxy (8).

11. Système informatique selon la revendication 9, **caractérisé en ce que** le calculateur serveur (3) et le calculateur client (4) sont reliés entre eux par un réseau de communication (1), le calculateur client (4) présentant de préférence une liaison de communication sans fil avec le réseau de communication (1).

12. Procédé pour la sélection d'unités d'information pour calculateurs clients mobiles (4), une information de situation géographique étant associée à chaque unité d'information et cette information de situation ainsi qu'une position du calculateur client (4) étant utilisées pour la sélection, **caractérisé en ce que** l'information de situation géographique est associée à chaque unité d'information, une position dans l'espace à cette unité d'information et la sélection détermine un nombre prédéfini d'unités d'information dont la position associée est la plus proche de la position du calculateur client (4), un diagramme de Voronoï ou bien une arborescence en deux dimensions étant utilisé(e) pour faciliter cette détermination.

13. Procédé selon la revendication 12, **caractérisé en ce qu'**on utilise, comme position du calculateur client (4), une position actuelle, passée ou future attendue du calculateur client (4).

14. Procédé selon la revendication 12 ou la revendication 13, **caractérisé en ce que** l'information de situation géographique est associée à chaque unité d'information, une position dans l'espace à cette unité d'information, et la sélection des unités d'information, dont la position associée se trouve dans l'environnement de la position du calculateur client (4), déterminée.

15. Procédé selon la revendication 12, **caractérisé en ce que** le calculateur serveur (3) détermine, en interagissant avec un utilisateur, des catégories intéressantes et limite la sélection à des unités d'information qui appartiennent à ces catégories intéressantes.

16. Procédé selon la revendication 13, **caractérisé en ce que** le calculateur serveur (3) transmet les résultats de la sélection au calculateur client (4) et le calculateur client (4) reproduit les résultats sur une unité d'affichage du calculateur client (4).

17. Procédé selon la revendication 12, **caractérisé en ce que** les unités d'information contiennent des données image produites par des caméras dites Web ou "webcams".
